# EUROPÄISCHE PATENTSCHRIFT

(11) **EP 2 247 696 B1**
(45) Veröffentlichungstag und Bekanntmachung des Hinweises auf die Patenterteilung: **23.01.2013**
(21) Anmeldenummer: 09717875.0
(22) Anmeldetag: 13.02.2009
(51) Int. Cl.: C10J 3/52

(54) **VERGASUNGSVORRICHTUNG MIT SCHLACKEABZUG**
GASIFICATION DEVICE WITH SLAG REMOVAL
DISPOSITIF DE GAZÉIFICATION AVEC ÉVACUATION DU MÂCHEFER

(30) Priorität: 05.03.2008 DE 102008012732
(43) Veröffentlichungstag der Anmeldung: 10.11.2010
(73) Patentinhaber: ThyssenKrupp Uhde GmbH, 44141 Dortmund (DE)
(72) Erfinder: KUSKE, Eberhard, 59494 Soest (DE); HANROTT, Christoph, 48153 Münster (DE)
(86) Internationale Anmeldenummer: PCT/EP2009/001004
(87) Internationale Veröffentlichungsnummer: WO 2009/109285

(56) Entgegenhaltungen:
- WO-A1-2006/053905
- DE-A1- 4 025 955
- US-A1- 2005 132 647

## Beschreibung

Die vorliegende Erfindung betrifft ein Verfahren für die Vergasung von feinkörnigen bis staubförmigen oder flüssigen Brennstoffen zur Erzeugung von Synthesegas, d.h. einem Gas, das als Hauptkomponenten CO und H₂ enthält, wobei Schlacke im schmelzflüssigen Zustand aus dem Vergasungsreaktor abgezogen und durch Kühlung mit Wasser zum Erstarren gebracht wird.

Bei der Vergasung von sowohl fein zerteilten Brennstoffen, z.B. staubförmigen Brennstoffen aus Kohle, Petrolkoks, biologischen Abfällen bzw. Brennstoffen, als auch flüssigen Rückständen, wie Öl, Teer, Raffinerie-Rückständen und anderen flüssigen Rückständen, unter Temperaturen oberhalb des Ascheschmelzpunktes des eingesetzten Brennstoffes, fällt Schlacke in schmelzflüssiger Form an. Die schmelzflüssige Schlacke sammelt sich am unteren Ende des Vergasungsreaktors an und läuft durch eine Ablauföffnung ab. Hierbei ist es üblich, dass die geschmolzene Schlacke in ein Wasserbad fällt, in dem sie abgeschreckt und granuliert wird, wobei sich ein glasartiges Material bildet. Im Zusammenhang mit der Vergasung unter erhöhtem Druck ist es aus der DE 23 42 079 C3 und der US 4 328 006 A bekannt, den Vergasungsreaktor und das darunter befindliche Wasserbad in einem gemeinsamen Druckbehälter anzuordnen. Bei dieser Anordnung umschließt die Druckbehälterwandung den Spalt zwischen dem Schlackeaustritt und dem Wasserbad. Es ist weiterhin bekannt, dass der Druckbehälter weder ausgemauert noch gekühlt ist. Bei der beschriebenen Anordnung sind somit Vorkehrungen zu treffen, dass die aus dem Reaktor austretende heiße Schlacke, Gase und andere Partikel nicht zur Aufheizung oder Beschädigung der Druckbehälterwand führen.

In der US 2007 0062 117 der Firma Future Energy wird das Synthesegas zusammen der Schlacke über die Schlackeaustrittsöffnung nach unten abgezogen. Der Druckbehälter wird hierbei vor hohen Temperaturen geschützt, indem direkt unter dem Schlackeaustritt eine Abkühlung des Synthesegases und der Schlacke mittels Wassereindüsung erfolgt. Zusätzlich zur Wassereindüsung ist zum Schutz des Druckmantels vor Erosion und Korrosion ein Verschleißmantel vorgesehen.

In der EP 0 377 930 der Firma Texaco wird das Synthesegas ebenfalls zusammen mit der Schlacke über die Schlackeaustrittsöffnung abgezogen. In der EP 0 377 930 erfolgt die Abkühlung des Synthesegases dadurch, dass es zusammen mit der Schlacke über einen Tauchschacht in das Wasserbad eingeleitet wird. Der Tauchschacht dient hierbei gleichzeitig dem Schutz des Druckbehälters. Der Tauchschacht selber wird durch einen Wasserfilm gekühlt und vor Ablagerung von Feststoffen geschützt.

Die in US 2007 0062 117 und EP 0 377 930 beschriebenen Verfahren haben den Nachteil, dass sie nur auf Vergasungsprozesse anwendbar sind, bei denen das Synthesegas zusammen mit der Schlacke über die Schlackeaustrittsöffnung abgezogen wird.

Bei Vergasern mit getrennten Abzug des Synthesegases und der Schlacke muss zusätzlich darauf geachtet werden, dass es nicht zu einer Auskühlung des Schlackeablaufs kommt. Eine Auskühlung des Schlackeablaufs kann zur vorzeitigen Verfestigung der Schlacke (d.h. zur Verstopfung des Schlackeablaufes) und somit zu Betriebsstörungen bis hin zum Ausfall der gesamten Anlage führen. Bei den in den Patenten US 2007 0062 117 und EP 0 377 930 beschriebenen Verfahren sorgt das zusammen mit der Schlacke austretende Synthesegas für eine ständig ausreichend hohe Temperatur am Schlackeaustritt. Dies ist bei Vergasern mit getrenntem Abzug von Rohgas und Schlacke nicht gegeben, da unter dem Schlackeablauf keine erzwungene Strömung vorhanden ist. Die vorherigen beschriebenen Verfahren können somit nicht für Vergaser mit getrenntem Abzug des Synthesegases und der Schlacke angewendet werden. Die verfahrenstechnische Anforderung an die Gestaltung des Schlackeablaufes besteht darin, Wärmeverluste an die Umgebung zu minimieren und somit eine vorzeitige Abkühlung / Erstarrung der Schlacke zu verhindern. Die Anordnung von intensiv gekühlten ("kalten") Umfassungswänden in unmittelbarer Nähe des Schlackeablaufes würde dagegen zu einer unerwünschten Abkühlung des Ablaufbereiches führen. Eine weitere Wärmesenke ist gegeben, wenn sich bei der Schlacke-Granulation (Verfestigung) Dampf entwickelt und in den Bereich des Fallschachtes aufsteigt. Er kann den Schacht nur durch den Schlackeablauf verlassen und kühlt dabei die ablaufende Schlacke ebenfalls ab.

Bei Vergasungsvorrichtungen mit getrennten Abzug der Schlacke und des Synthesegases hat sich, wie in der US 5 441 547, US 5 803 937 oder EP 0 318 071 zu erkennen, ein Schlackeaustragschacht durchgesetzt. Dieser verbindet den Schlackeaustrag mit dem Wasserbad und schirmt somit die Druckbehälterwand gegen zu hohe Temperaturen ab. Der Schlackeaustragsschacht kann dabei bis in das Wasserbad hineinragen oder etwas über diesem aufhören, so dass ein Druckausgleich zwischen dem Schlackeaustragsschacht und dem Ringraum zwischen Druckbehälterwand und Schlackeaustritt hergestellt wird.

In der EP 0 318 071 ist ein Schlackeaustragsschacht zu erkennen, der bis kurz über dem Wasserbad reicht. Am unteren Ende des Schlackeaustragschachtes ist zudem ein Ring mit Sprühvorrichtungen zur Befeuchtung der Schlacke vorgesehen. Aus der Zeichnung der EP 0 318 071 ist zu erkennen, dass die Wandung des Schlackeaustragschachtes ohne eine Kühlung vorgesehen ist.

Nachteilig an dieser Ausführung ist, dass die Wand des Schachtes einer hohen Temperatur ausgesetzt ist, was zu einer Beschädigungen der Wand und somit zu Betriebsstörungen führen kann. Zusätzlich können sich im unteren Bereich des Schlackeaustragsschachtes Ablagerungen an der Wand bilden, da diese in Kontakt mit Wasser aus dem Düsenring kommen kann. Hierbei bilden sich im Randbereich des Sprühkegels Übergangszonen aus, in denen sich die Wand im zeitlichen Wechsel in "trockenem" oder "feuchtem" Zustand befindet. In derartigen Bereichen ist erfahrungsgemäß eine ausgeprägte Tendenz zur Bildung von verkrusteten Feststoffablagerungen vorhanden. Auch bei einer Ausführung mit zusätzlicher Auskleidung der Wand mit einem temperaturbeständigen Material wird der Austragsschacht hohen Temperaturen ausgesetzt, da die Wand über den Ringraum keine ausreichende Kühlung erfährt. Neben der erhöhten Gefahr von Ablagerung bei der Verwendung von temperaturbeständigen Materialien, kann durch den Kontakt mit dem Sprühwasser die temperaturbeständige Auskleidung rissig werden und abblättern. Die herunterfallenden Teile der Auskleidung können so zu Verstopfung im Wasserbad bzw. im nachgeschalteten Schlackeaustragsystem führen.

In dem in der WO 2006 053 905 beschriebenen Schlackeaustragschacht handelt es sich um einen Schacht mit hitzebeständig ausgekleideten Membranwänden. Die Membranwand wird von einem Kühlmedium durchflossen, so dass eine ausreichende Kühlung der Wand sichergestellt wird. Eine Auskühlung des Schlackeausritts wird durch die hitzebeständige Auskleidung vermieden. Jedoch lässt man den über den Düsen befindlichen Teil der Wand frei von Isoliermasse, um dass Absplittern von Teilen der Isoliermasse zu vermeiden. Unter dem Schlackeaustragsschacht befindet sich ein Behälter für das Wasserbad an dessen Oberkante sich ein Düsenkranz zur Befeuchtung der Schlacke befindet. Zwischen dem Düsenkranz und dem Schlackeaustragsschacht befindet ist ein Spalt vorgesehen, um einen Druckausgleich zwischen dem Reaktor und dem Ringraum herzustellen. Die Wasserdüsen des Düsenkranzes sorgen neben der Befeuchtung der Schlacke zudem auch für eine Kühlung und Befeuchtung der nicht im Wasserbad befindlichen Behälterwand. Der nicht im Wasserbad befindliche Teil der Behälterwand muss dabei so gewählt sein, dass der Wasserspiegel bei Schwankungen des Wasserlevels nicht bis zum Düsenkranz bzw. zum Ringspalt ansteigt.

Nachteilig an dem beschriebenen Aufbau in der WO 2006 053 905 sind die abwechselnd trocken und nassen Wände. Hierzu gehört der ohne Auskleidung ausgeführte Bereich des Schlackeaustragschachtes, sowie der Teil der Behälterwand des Wasserbades, welcher nicht vom Wasser bedeckt ist. Auf diesen Flächen können sich unter diesen Bedingungen erfahrungsgemäß verbackene Feststoffablagerungen bilden, die letztlich zu Betriebsstörungen führen können. Zudem besteht bei der Eindüsung von Wasser in den Schlackeaustragschacht eine erhöhte Gefahr der Auskühlung der Schlackeaustragsöffnung durch Bildung von Wasserdampf. Das Eindüsen von Wasser und die nicht ausgekleideten Membranwände des Schlackeaustragschachtes bewirken zudem einen zusätzlichen Kühleffekt auf die Schlackeaustrittsöffnung, der in der beschriebenen Ausführung nur durch einen ausreichenden Abstand zwischen den kühleren Oberflächen und der Wassereindüsung verringert werden kann.

Die Aufgabe der Erfindung ist es daher, einen Schlackeaustrag für die Vergasung von flüssigen oder fein zerteilten, festen Brennstoffen bei Temperaturen über dem Ascheschmelzpunkt der Brennstoffe und einem Druck von 0,3 bis 8 MPa bereitzustellen, welcher die beschriebenen Nachteile nicht aufweist.

Die Erfindung löst die Aufgabe durch eine Vorrichtung, bei der
- ein Vergasungsreaktor und ein Wasserbad in einem Druckbehälter angeordnet sind,
- das Wasserbad unterhalb des Vergasungsreaktors angeordnet ist,
- der Vergasungsreaktor so ausgestaltet ist, dass
   o das erzeugte Synthesegas im oberen Bereich des Reaktors abgezogen wird,
   o sich flüssige Schlacke and den Wänden des Reaktionsraumes niederschlägt, die frei ablaufen kann, ohne dass die Oberfläche dieser Schlacke erstarrt,
   o sich an der Unterseite des Reaktionsraumes eine Öffnung mit einer Abtropfkante befindet, an der die flüssig herablaufende Schlacke abtropfen kann,
- sich unter der Öffnung ein Schlackeaustragsschacht anschließt, der bis in das Wasserbad hineinragt, wobei
   o der obere Teil der Wandung des Schlackeaustragschachtes von einem Kühlmedium durchströmt wird und auf der Schachtinnenseite vollständig mit einer temperaturbeständigen Isoliermasse beschichtet ist,
   o der untere bis in das Wasserbad hineinragende Teil der Wandung des Schlackeaustragschachtes auf der Innenseite mit einem Wasserfilm bedeckt ist und gasdicht mit dem oberen Teil verbunden ist,
   o der untere und der obere Teil des Schlackeaustragschachtes so miteinander verbunden sind, dass der Wasserfilm der unteren Wandung nicht mit der vom Kühlmedium durchströmten Wandung oder der Isoliermasse in Kontakt kommt.

Die Vergasung erfolgt dabei vorzugsweise in der Schwebe bei einer geringen Partikelbeladung von kleiner 50 kg/m³ - nicht in einer Wirbelschicht - mit sauerstoffhaltigen Vergasungsmitteln und unter erhöhtem Druck bei Temperaturen oberhalb des Schlackeschmelzpunktes, wobei die an Wänden ausgeschiedene Schlacke den Vergaser durch eine Öffnung im Boden verlassen und das erzeugte Synthesegas über Kopf abgezogen wird.

In Ausgestaltungen der Erfindung ist vorgesehen, dass als feste Brennstoffe Kohle, Petrolkoks, biologische Abfälle, biologische Brennstoffe oder Kunststoffe in zerkleinerter Form eingesetzt werden. Die Durchmesser der festen Brennstoffe sollten 0,5 mm nicht übersteigen. Zuerst werden Feststoffe in einer oder mehreren parallelen Schleusvorrichtungen mit Hilfe eines nicht kondensierbaren Gases wie N₂ oder CO₂ auf Druck gebracht, der 2 bis 10 bar über dem Vergaserdruck liegt. Dann werden die Feststoffe pneumatisch aus einem oder mehreren Einspeisebehälter in den Vergaser gefördert, bevorzugt als Dichtstromförderung. Als flüssige Brennstoffe können Öl, Teer, Raffinerierückstände oder wässrige Suspensionen eingesetzt werden. Die meisten flüssigen Brennstoffe können in den Vergaser gepumpt werden, nur bei abrasiven Flüssigkeiten ist Schleusung und Druckerhöhung mit einem komprimierten Gas vorzuziehen. Eine Mischung fester und flüssiger Brennstoffe ist ebenfalls möglich. Auch brennbare oder schadstoffhaltige Gase können in den Vergaser eingespeist werden. Bei den hohen Vergasungstemperaturen werden Schadstoffe thermisch zerlegt, wobei die festen Reaktionsprodukte in die glasige Schlacke eingebettet werden und die gasförmigen Produkte den Vergaser als einfache Moleküle wie H₂, CO, N₂, HCl oder H₂S verlassen.

In weiteren Ausgestaltungen der Erfindung ist vorgesehen, dass die Vergasungsreaktion in einer Staub- oder Tropfenwolke durchgeführt wird. Die Zufuhr des Brennstoffs und der Vergasungsmittel in den Vergaser kann durch mindestens zwei auf der Seitenwand des Vergasungsreaktors mit separaten Befestigungen angebrachten Brennern erfolgen. Die Vergasungsmittel können vor Eintritt in den Reaktor durch Leitbleche oder eine spezielle Gestaltung der Brenner mit einem Drall versehen werden.

In weiteren Ausgestaltungen der Erfindung ist vorgesehen, dass die Wassereindüsung für den Wasserfilm in eine Ringkammer erfolgt. Die Ringkammer ist dabei hinter dem oberen Teil des Schlackeaustragschachtes angebracht. Die Ringkammer verbindet gasdicht den oberen und den unteren Teil des Schlackeaustragschachtes. Das in die Ringkammer eingedüste Wasser fließt über eine gewölbte Ablaufkante aus der Ringkammer ab und bildet einen geschlossenen Wasserfilm auf der unteren Wandung des Schlackeaustragschachtes. Der Wasserfilm steht dabei nicht in Kontakt mit dem oberen Teil der Wandung, so dass dieser vollständig mit einer temperaturbeständigem Isoliermasse ausgekleidet werden kann.

Hierbei ist vorgesehen, dass der Flüssigkeitsfilm mittels einer umlaufenden Überlauftasse erzeugt wird, der die Flüssigkeit in Umfangsrichtung in tangentialer Richtung zugeführt wird. In einer vorteilhaften Asugestaltung ist vorgesehen, dass der Flüssigkeitsfilm an einem Überlaufelement der Überlauftasse erzeugt wird, dessen vertikale Schnittfläche einen Kreisbogen von mindestens 45 °beschreibt, der stetig und glatt in den in das Wasserbad hinabreichenden Teil der Wandung übergeht. Unter "glatt" ist hierbei eine Kurvenform anzusehen, die als mathematische Kurve differenzierbar ist. Praktischerweise kann das Überlaufelement als Überlaufwehr ausgebildet sein. Hierbei ist besonders vorteilhaft, wenn das Überlaufelement einen Kreisbogen von mindestens 90° beschreibt, der stetig und glatt in den in das Wasserbad hinabreichenden Teil der Wandung übergeht.

Aus einem geschlossenen Film entweichen keine Wassertropfen und die Oberfläche des Wasserfilms ist um mehrere Größenordnungen kleiner als die eines durch Düsen erzeugten Tropfenspektrums, wodurch der überwiegend durch Verdunstung verursachte Kühleffekt schwach ist. Die Umgebung der Schlackeabtropfkante bleibt damit Wassertropfenfrei und heiß, so dass Erstarrung der Schlacke direkt an der Abtropfkante ausgeschlossen werden kann, was ein Vorteil der Erfindung ist. Da die Gasatmosphäre im Schlackeaustragsschacht auf diese Weise trocken bleibt, werden dort auch keine Ablagerungen durch Wasserverdunstung an der Wand gebildet. Zusammen mit dem verringerten Kühleffekt durch die vollständig ausgekleidete obere Wandung des Schlackeaustragschachtes wird so eine geringere Bauhöhe des Schlackeaustragschachtes ermöglicht.

In weiteren Ausgestaltungen der Erfindung ist vorgesehen, dass im unterhalb des Reaktors angeordneten Wasserbad eine Zirkulationsströmung erzeugt wird.

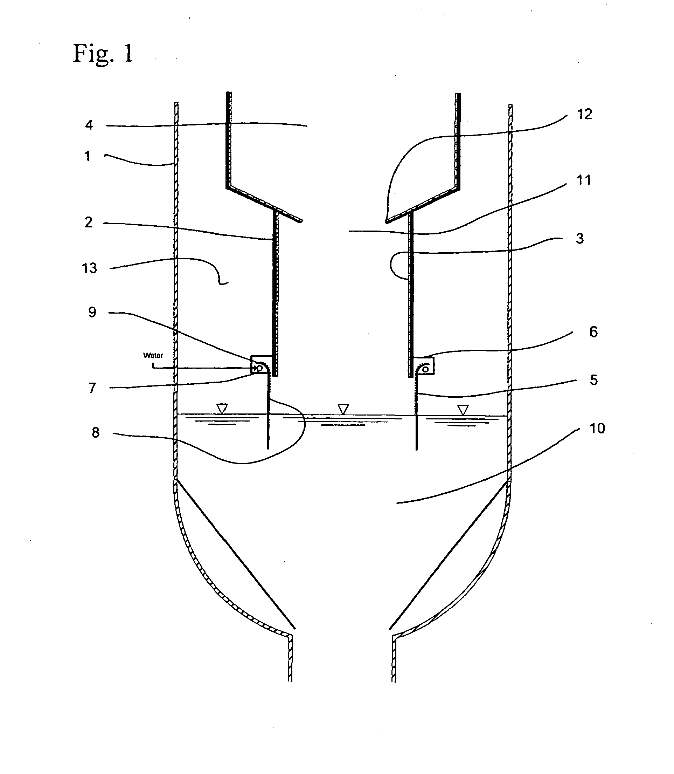

Die Erfindung wird im folgendem anhand eines Beispieles näher erläutert. Fig. 1 zeigt einen erfindungsgemäßen Schlackeaustrag eines Vergasungsapparates schematisch im Längsschnitt. Die Erfindung ist jedoch nicht auf dieses Ausführungsbeispiel beschränkt.

Die Vergasung des Brennstoffs erfolgt mit einem sauerstoffhaltigen Vergasungsmittel im Reaktionsraum 4 unter Druck (0,3 - 8 MPa) und oberhalb des Ascheschmelzpunktes bei Temperaturen von 1200 - 2500°C. Brennstoff, Reaktionsmittel und optional zu entsorgende Abfälle werden über mindestens zwei seitlich angeordnete Brenner zugeführt.

Flüssige, an den Wänden des Reaktionsraumes 4 abgeschiedene Schlacke fließt entlang der Wand zu der Austrittsöffnung 11, löst sich von der Abtropfkante 12 und fällt als Tropfen oder Strahl in das Wasserbad 10. Das erzeugte, staubhaltige Gas wird über Kopf aus dem Reaktionsraum 4 abgezogen

An dem unteren Teil des Reaktionsraumes 4 schließt sich eine Membranwand 2 an. Die Membranwand 2 ist zur Vermeidung einer Auskühlung der Schlackeaustrittsöffnung 11 vollständig mit einer temperaturbeständigen lsoliermasse 3 versehen. An die Membranwand 2 schließt sich wiederum, verbunden über eine Ringkammer 6, ein Tauchschacht 5 an, der bis in das Wasserbad 10 hineinreicht. Der Tauchschacht 5 ist in diesem Beispiel als einfache Blechwand ausgeführt. Die Membranwand 2 und der Tauchschacht 5 trennen die Druckbehälterwand 1 und den Schlackeaustrag voneinander, so dass sich ein Ringraum 13 zwischen der Druckbehälterwand und dem Austragsschacht bildet. Der Druckausgleich zwischen dem Reaktionsraum 4 und dem Ringraum 13 erfolgt in dieser Ausführung über das Wasserbad 10, welches mit dem Reaktionsraum 4 und dem Ringraum 13 in Kontakt steht. Ein weiterer Druckausgleich findet über eine nicht dargestellte Gasquenchvorrichtung oberhalb des Reaktionsraumes 4 statt.

Zur Kühlung und Vermeidung von Ablagerungen wird der nicht im Wasserbad befindliche Teil des Tauchschachtes 5 von einem geschlossenen Wasserfilm 8 überströmt. Der Wasserfilm 8 wird in der Ringkammer 6 erzeugt, welche an der Oberkante des Tauchschachtes 5 und an der Rückseite der Membranwand 2 angebracht ist. Die Ringkammer 6 verbindet auf diese Weise gasdicht die Membranwand 2 und den Tauchschacht 5 miteinander. Über eine Wasserzufuhr 7 wird Wasser in die Ringkammer 6 eingebracht. Die Wasserzufuhr erfolgt vorzugsweise in Umfangsrichtung (tangential), um Sedimentation von Feststoffen zu vermeiden. Das Wasser fließt anschließend über ein Überlaufwehr 9, das vorzugsweise als gewölbte Ablaufkante aufgeführt ist, aus der Ringkammer 6 ab und bildet so einen geschlossenen Wasserfilm 8 auf der Wandung des Tauchschachtes 5. Der Überlauf und der Wasserfilm 8 sind hierbei so ausgebildet, dass es zu keinem Kontakt zwischen dem Wasserfilm 8 und der Membranwand 2 oder der Auskleidung 3 kommt.

### Bezugszeichenliste

1. Druckbehälterwand
2. Membranwand
3. Isoliermasse
4. Reaktionsraum
5. Tauchschacht
6. Ringkammer für Wassereindüsung
7. Wasserzuleitung für Wasserfilm
8. Wasserfilm
9. Überlaufwehr für Wasserfilm
10. Wasserbad
11. Austrittsöffnung
12. Ablaufkante
13. Ringraum

## Patentansprüche

1. Vorrichtung zum Schlackeaustrag aus einem Reaktor für die Flugstromvergasung von flüssigen oder fein zerteilten, festen Brennstoffen bei Temperaturen über dem Ascheschmelzpunkt der Brennstoffe und einem Druck von 0,3 bis 8 MPa , wobei
• ein Vergasungsreaktor und ein Wasserbad in einem Druckbehälter angeordnet sind,
• das Wasserbad unterhalb des Vergasungsreaktors angeordnet ist,
• der Vergasungsreaktor so ausgestaltet ist, dass
o das erzeugte Synthesegas im oberen Bereich des Reaktors abgezogen wird,
o sich flüssige Schlacke and den Wänden des Reaktionsraumes niederschlägt, die frei ablaufen kann, ohne dass die Oberfläche dieser Schlacke erstarrt,
o sich an der Unterseite des Reaktionsraumes eine Öffnung mit einer Abtropfkante befindet, an der die flüssig herablaufende Schlacke abtropfen kann,
**dadurch gekennzeichnet, dass**
• sich unter der Öffnung ein Schläckeaustragsschacht anschließt, der bis in das Wasserbad hineinragt, wobei
o der obere Teil der Wandung des Schlackeaustragschachtes von einem Kühlmedium durchströmt wird und auf der Schachtinnenseite vollständig mit einer temperaturbeständigen Isoliermasse beschichtet ist,
o der untere bis in das Wasserbad hineinragende Teil der Wandung des Schlackeaustragschachtes auf der Innenseite mit einem Wasserfilm bedeckt und gasdicht mit dem oberen Teil verbunden ist,
o der untere und der obere Teil des Schlackeaustragschachtes so miteinander verbunden sind, dass der Wasserfilm der unteren Wandung nicht mit der vom Kühlmedium durchströmten Wandung oder der Isoliermasse in Kontakt kommt.

2. Vorrichtung nach Anspruch 1, **dadurch gekennzeichnet, dass** der der untere, in das Wasserbad hineinragende Teil der Wandung zumindest um 0,5 m unterhalb des tiefsten zulässigen Standes des Wasserbades hinabreicht.

3. Vorrichtung nach Anspruch 1, **dadurch gekennzeichnet, dass** der in das Wasserbad hineinragende Teil der Wand einen größeren Durchmesser aufweist als der obere Teil.

4. Vorrichtung nach Anspruch 1, **dadurch gekennzeichnet, dass** die gasdichte Verbindung zwischen Ober- und Unterteil auf der Rückseite des Oberteils vorgesehen ist.

5. Vorrichtung nach Anspruch 1, **dadurch gekennzeichnet, dass** der die Innenseite des Unterteils benetzende Wasserfilm im Überlappungsbereich von Ober- und Unterteil erzeugt wird.

6. Vorrichtung nach Anspruch 1, **dadurch gekennzeichnet, dass** der Wasserfilm mittels einer umlaufenden Überlauftasse erzeugt wird, der das Wasser in Umfangsrichtung in tangentialer Richtung zugeführt wird.

7. Vorrichtung nach Anspruch 1, **dadurch gekennzeichnet, dass** der Wasserfilm an einem Überlaufelement der Überlauftasse erzeugt wird, dessen vertikale Schnittfläche einen Kreisbogen von mindestens 45 ° beschreibt, der stetig und glatt in den in das Wasserbad hinabreichenden Teil der Wandung übergeht.

8. Vorrichtung nach Anspruch 7, **dadurch gekennzeichnet, dass** das Überlaufelement als Überlaufwehr ausgebildet ist.

9. Vorrichtung nach Anspruch 7, **dadurch gekennzeichnet, dass** das Überlaufelement einen Kreisbogen von mindestens 90° beschreibt, der stetig und glatt in den in das Wasserbad hinabreichenden Teil der Wandung übergeht.

## Claims

1. Device for the removal of slag from a reactor for entrained-bed gasification of liquid or fine-grain solid fuel materials at temperatures which exceed the ash melting point of the fuel materials and at a pressure of 0.3 to 8 MPa, with
• a gasification reactor and a water bath being arranged in a pressure vessel;
• the water bath being arranged below the gasification reactor;
• the gasification reactor being designed in such a manner that
o the synthesis gas produced is withdrawn from the upper section of the reactor,
o liquid slag precipitates on the wall of the reaction chamber and then has a free downflow, without any solidification of the slag surface,
o the lower side of the reaction chamber has an outlet opening with a drop-off edge so that the downstream of liquid slag can freely drop off the said edge,
**characterised in that**
• a slag removal duct arranged below the said opening reaches down into the water bath and has the following details:
o a cooling agent flows through the upper section of the wall of the slag removal duct and the internal side of the duct is completely lined with a temperature-resistant insulating compound,
o the lower section of the slag removal duct wall which reaches down into the water bath is wetted by a water film on the internal side and linked in a gas-tight manner with the upper section,
o the upper and the lower sections of the slag removal duct are connected with each other in such a manner that the water film of the lower wall section does not come into contact with the wall penetrated by the cooling agent nor with the insulating compound.

2. Device in accordance with the preceding Claim 1, **characterised in that** the lower wall section reaching down into the water bath has a depth of at least 0.5 m below the min. admissible water level in the said bath.

3. Device in accordance with the preceding Claim 1, **characterised in that** the wall section reaching down into the water bath has a diameter larger than that of the upper section.

4. Device in accordance with the preceding Claim 1, **characterised in that** the gas-tight connection located between the upper section and the lower section is fitted to the rear side of the upper section.

5. Device in accordance with the preceding Claim 1, **characterised in that** the water film wetting the internal side of the lower section is produced in the overlapping range of the upper and lower sections.

6. Device in accordance with the preceding Claim 1, **characterised in that** the water film is generated by means of a rotary overflow basin, which receives the water in circumferential direction tangentially.

7. Device in accordance with the preceding Claim 1, **characterised in that** the water film is produced with the aid of an overflow element fitted to the overflow basin, the vertical cross-section of the said element forming a circular segment of at least 45°, thus obtaining a constant and even area of the wall section reaching down into the water bath.

8. Device in accordance with the preceding Claim 7, **characterised in that** the overflow element is designed as an overflow weir.

9. Device in accordance with the preceding Claim 7, **characterised in that** the overflow element forms a circular segment of at least 90° so as to obtain a constant and even area of the wall section which reaches down into the water bath.

## Revendications

1. Dispositif d'évacuation du mâchefer d'un réacteur pour la gazéification en flux entraîné de combustibles liquides ou solides finement décomposés, à des températures supérieures au point de fusion des cendres des combustibles et à une pression de 0,3 à 8 MPa,
• un réacteur de gazéification et un bain d'eau étant disposés dans un récipient sous pression,
• le bain d'eau étant disposé au-dessous du réacteur de gazéification,
• le réacteur de gazéification étant conçu de manière telle que
o le gaz de synthèse produit est extrait dans la zone supérieure du réacteur,
o du mâchefer liquide se précipite sur les parois du compartiment de réaction, celui-ci pouvant s'écouler librement sans que la surface de ce mâchefer ne se solidifie,
o une ouverture, avec un rejet d'eau permettant au mâchefer liquide de s'écouler, est située sur la face inférieure du compartiment de réaction,
**caractérisé en ce que**
• une gaine d'évacuation du mâchefer qui pénètre dans le bain d'eau est raccordée au-dessous de l'ouverture,
o la partie supérieure de la paroi de la gaine d'évacuation du mâchefer étant traversée par un fluide de refroidissement et étant entièrement revêtue sur la face intérieure de la gaine d'une masse isolante résistante à la température,
o la partie inférieure de la paroi de la gaine d'évacuation du mâchefer pénétrant dans le bain d'eau étant recouverte d'un film d'eau sur la face intérieure et étant raccordée à la partie supérieure en étant étanche aux gaz,
o la partie inférieure et la partie supérieure de la gaine d'évacuation du mâchefer étant raccordées l'une à l'autre de manière telle que le film d'eau de la paroi inférieure n'entre pas en contact avec la paroi traversée par le fluide de refroidissement ou la masse isolante.

2. Dispositif selon la revendication 1, **caractérisé en ce que** la partie inférieure de la paroi pénétrant dans le bain d'eau arrive au moins à 0,5 mm au-dessous du niveau admissible le plus bas du bain d'eau

3. Dispositif selon la revendication 1, **caractérisé en ce que** la partie de la paroi pénétrant dans le bain d'eau a un diamètre supérieur à la partie supérieure.

4. Dispositif selon la revendication 1, **caractérisé en ce que** le raccordement étanche aux gaz entre la partie supérieure et la partie inférieure est prévu au dos de la partie supérieure

5. Dispositif selon la revendication 1, **caractérisé en ce que** le film d'eau qui mouille la face intérieure de la partie inférieure est généré dans la zone de chevauchement de la partie supérieure et de la partie inférieure

6. Dispositif selon la revendication 1, **caractérisé en ce que** le film d'eau est généré au moyen d'une cuvette de trop-plein périphérique dans laquelle l'eau est amenée de manière tangentielle dans le sens périphérique

7. Dispositif selon la revendication 1, **caractérisé en ce que** le film d'eau est généré au niveau d'un élément de trop-plein de la cuvette de trop-plein, la section verticale dudit élément de trop-plein décrivant un arc de cercle d'au moins 45° qui se déploie constamment et régulièrement pour se confondre avec la partie de la paroi pénétrant dans le bain d'eau

8. Dispositif selon la revendication 7, **caractérisé en ce que** l'élément de trop-plein se présente sous forme de barrage-déversoir .

9. Dispositif selon la revendication 7, **caractérisé en ce que** l'élément de trop-plein décrit un arc de cercle d'au moins 90° qui se déploie constamment et régulièrement pour se confondre avec la partie de la paroi pénétrant dans le bain d'eau.
